# EUROPEAN PATENT APPLICATION

(11) **EP 4 442 722 A1**
(43) Date of publication of application: **09.10.2024**
(21) Application number: 22898251.8
(22) Date of filing: 11.10.2022
(51) Int. Cl.: C08F 290/06, A61C 7/08, B33Y 80/00, B29C 64/129, B33Y 70/00

(54) **3D PRINTING COMPOSITION**

(30) Priority: 29.11.2021 JP 2021193483
(71) Applicant: GC Corporation, Sunto-gun, Shizuoka 410-1307 (JP)
(72) Inventor: TAKADA, Daisuke, Tokyo 174-8585 (JP); KARIYA, Shuji, Tokyo 174-8585 (JP); UENO, Takayuki, Tokyo 174-8585 (JP)
(74) Representative: Müller-Boré & Partner Patentanwälte PartG mbB
(86) International application number: PCT/JP2022/037881
(87) International publication number: WO 2023/095467

(57) **Abstract**

A three-dimensional printing composition includes: a first (meth)acrylate having a urethane bond; a second (meth)acrylate having a polyconjugated diene structure and a urethane bond; and a monofunctional third (meth)acrylate having a glass transition temperature Tg of 70°C or more.

## Description

### Technical Field

The present invention relates to a three-dimensional printing composition.

### Background Art

In recent years, technology for three-dimensional printing of articles has developed, and in the field of dentistry, dental articles such as denture bases and artificial teeth are being produced as three-dimensional printing articles (see, for example, Patent Document 1).

The applicant also discloses a three-dimensional printing composition used in an orthodontic aligner (see, for example, Patent Document 2).

### Citation List

### Patent Document

Patent Document 1: International Publication No. 2019/203356
Patent Document 2: International Publication No. 2020/017122

### Summary of Invention

### Technical Problem

For three-dimensional printing articles, materials with even higher strength are required while maintaining transparency.

An object of the present invention is to provide a three-dimensional printing composition for obtaining three-dimensional printing articles having high strength and excellent transparency.

### Solution to Problem

According to one aspect of the present disclosure, a three-dimensional printing composition includes: a first (meth)acrylate having a urethane bond; a second (meth)acrylate having a polyconjugated diene structure and a urethane bond; and a monofunctional third (meth)acrylate having a glass transition temperature Tg of 70°C or more.

### Advantageous Effects of Invention

According to one aspect of the present disclosure, printing articles having high strength and excellent transparency can be obtained.

### Description of Embodiments

In the following, embodiments of the present invention will be described.

A three-dimensional printing composition according to the present embodiment includes a first (meth)acrylate, a second (meth)acrylate, and a third (meth)acrylate.

In the present specification, the (meth)acrylate refers to a compound (for example, a monomer, an oligomer, a prepolymer, or the like) having either or both of a methacryloyloxy group and an acryloyloxy group.

The first (meth)acrylate is a (meth)acrylate having a urethane bond. The first (meth)acrylate constitutes a matrix resin (or a base resin) in the three-dimensional printing composition according to the present embodiment.

In the present specification, the urethane bond refers to a bond via a urethane group (-NHCOO-).

The first (meth)acrylate having a urethane bond is not particularly limited, but is, for example, urethane dimethacrylate, a mixture of oligomers and polymers of urethane dimethacrylate, and the like. The compound may be used alone or in combination of two or more.

The first (meth)acrylate is preferably a (meth)acrylate having no polyconjugated diene structure.

The content of the first (meth)acrylate is not particularly limited, but is, for example, 20 mass% or more and 80 mass% or less, preferably 30 mass% or more and 70 mass% or less, more preferably 40 mass% or more and 60 mass% or less. When the content of the first (meth)acrylate in the three-dimensional printing composition is 20 mass% or more and 80 mass% or less, printing articles are easily three-dimensionally printed.

The second (meth)acrylate is a (meth)acrylate having a polyconjugated diene structure and a urethane bond.

In the present specification, the polyconjugated diene structure refers to a polymer structure of a diene in which double bonds are separated by one single bond and conjugated. The polyconjugated diene structure may be a structure in which a polyconjugated diene is hydrogenated (a hydrogenated polyconjugated diene structure).

The second (meth)acrylate having a polyconjugated diene structure and a urethane bond is not particularly limited, but is, for example, 1,2-polybutadiene urethane (meth)acrylate represented by the following chemical formula. The compound may be used alone or in combination of two or more.

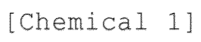

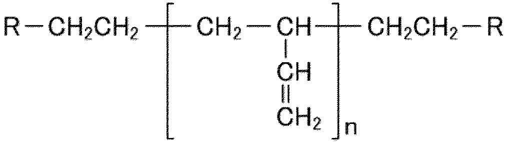

### (where n is an integer of 1 or more.)

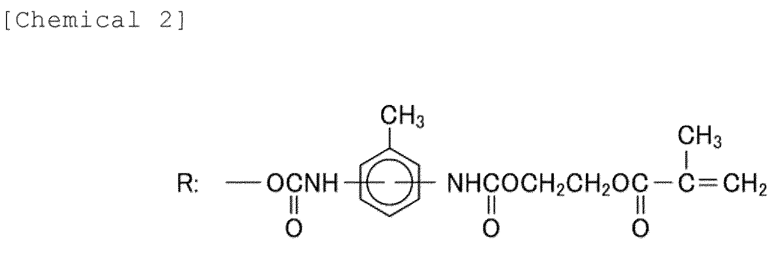

The second (meth)acrylate having a polyconjugated diene structure and a urethane bond preferably has two or more urethane bonds, more preferably three or more urethane bonds, and even more preferably four or more urethane bonds.

The content of the second (meth)acrylate is not particularly limited, but is, for example, 1 mass% or more and 25 mass% or less, preferably 3 mass% or more and 20 mass% or less, and even more preferably 5 mass% or more and 15 mass% or less. When the content of the second (meth)acrylate in the three-dimensional printing composition is 1 mass% or more and 25 mass% or less, the strength and transparency of the three-dimensional printing article can be improved.

The third (meth)acrylate is a monofunctional (meth)acrylate having a glass transition temperature Tg of 70°C or more.

In the present specification, the monofunctional (meth)acrylate refers to a (meth)acrylate having one (meth)acryloyl group in the molecule.

The glass transition temperature Tg is the temperature at which the glass transition occurs and is measured by differential scanning calorimetry (DSC). In the present embodiment, the glass transition temperature Tg is 70°C or more, preferably 80°C or more, and more preferably 90°C or more. When the glass transition temperature Tg is less than 70°C, the strength of the obtained three-dimensional printing article decreases.

The monofunctional third (meth)acrylate having a glass transition temperature Tg of 70°C or more is preferably a (meth)acrylate having no urethane bond.

The monofunctional third (meth)acrylate having a glass transition temperature Tg of 70°C or more is not particularly limited, but is, for example, isobornyl (meth)acrylate, t-butyl (meth)acrylate, phenyl (meth)acrylate, methyl (meth)acrylate, cyclohexyl (meth)acrylate, dihydrodicyclopentadienyl (meth)acrylate, and the like. The compound may be used alone or in combination of two or more.

The content of the third (meth)acrylate is not particularly limited, but is, for example, 15 mass% or more and 70 mass% or less, preferably 20 mass% or more and 65 mass% or less, more preferably 40 mass% or more and 60 mass% or less. When the content of the third (meth)acrylate in the three-dimensional printing composition is 15 mass% or more and 70 mass% or less, the strength of the three-dimensional printing article can be improved.

The three-dimensional printing composition according to the present embodiment may contain other components as long as the object of the present invention is not impaired. Examples of the other components contained in the three-dimensional printing composition include a photopolymerization initiator, a polymerization inhibitor, an ultraviolet absorber, a photopolymerization accelerator, a pigment, a storage stabilizer, and the like.

The photopolymerization initiator is not particularly limited, but is, for example, camphorquinone (CQ), 2,4,6-trimethylbenzoyldiphenylphosphine oxide (TPO), phenylbis(2,4,6-trimethylbenzoyl)phosphine oxide, benzyl ketal, diacetyl ketal, benzyl dimethyl ketal, benzyl diethyl ketal, benzyl bis(2-methoxyethyl) ketal, 4,4'-dimethyl(benzyl dimethyl ketal), anthraquinone, 1-chloroanthraquinone, 2-chloroanthraquinone, 1,2-benzanthraquinone, 1-hydroxyanthraquinone, 1-methylanthraquinone, 2-ethylanthraquinone, 1-bromoanthraquinone, thioxanthone, 2-isopropylthioxanthone, 2-nitrothioxanthone, 2-methylthioxanthone, 2,4-dimethylthioxanthone, 2,4-diethylthioxanthone, 2,4-diisopropylthioxanthone, 2-chloro-7-trifluoromethylthioxanthone, thioxanthone-10,10-dioxide, thioxanthone-10-oxide, benzoin methyl ether, benzoin ethyl ether, benzoin isopropyl ether, benzoin isobutyl ether, benzophenone, bis(4-dimethylaminophenyl)ketone, 4,4'-bis(diethylamino)benzophenone, and the like.

The photopolymerization initiator may be used alone or in combination of two or more. Among these, 2,4,6-trimethylbenzoyldiphenylphosphine oxide (TPO) and phenylbis(2,4,6-trimethylbenzoyl)phosphine oxide are preferable.

The content of the photopolymerization initiator in the three-dimensional printing composition is not particularly limited, but is, preferably 0.01 mass% or more and 10 mass% or less, more preferably 0.1 mass% or more and 8 mass% or less, and even more preferably 1 mass% or more and 5 mass% or less. When the content of the photopolymerization initiator in the three-dimensional printing composition is 0.01 mass% or more, the curability of the three-dimensional printing article is improved, and when the content is 10 mass% or less, the three-dimensional printing composition becomes easier to be photo-cured, and the transparency of the three-dimensional printing article is improved.

The polymerization inhibitor is not particularly limited, but is, for example, dibutylhydroxytoluene (2,6-di-tert-butyl-p-cresol) (BHT), 6-tert-butyl-2,4-xylenol, and the like.

The polymerization inhibitor may be used alone or in combination of two or more. Among these, dibutylhydroxytoluene (BHT) is preferable.

The content of the polymerization inhibitor in the three-dimensional printing composition is not particularly limited, but is preferably 0.001 mass% or more and 5 mass% or less, more preferably 0.005 mass% or more and 3 mass% or less, and even more preferably 0.01 mass% or more and 1 mass% or less. When the content of the photopolymerization initiator in the three-dimensional printing composition is 0.001 mass% or more and 5 mass% or less, the storage stability of the three-dimensional printing composition is improved.

The ultraviolet absorber is not particularly limited, but is, for example, 2,5-bis(5-tert-butyl-2-benzoxazolyl) thiophene, 2-(2H-benzotriazole-2-yl)-4-methylphenol, and the like.

The ultraviolet absorber may be used alone or in combination of two or more. Among these, 2,5-bis(5-tert-butyl-2 benzoxazolyl) thiophene is preferable in terms of improving the printability of the obtained three-dimensional printing article, and 2-(2H-benzotriazole-2-yl)-4-methylphenol is preferable in terms of improving the photostability of the three-dimensional printing composition.

The content of the ultraviolet absorber in the three-dimensional printing composition is not particularly limited, but is, preferably 0.0005 mass% or more and 5 mass% or less, more preferably 0.001 mass% or more and 3 mass% or less, and even more preferably 0.005 mass% or more and 1 mass% or less. When the content of the photopolymerization initiator in the three-dimensional printing composition is 0.0005 mass% or more and 5 mass% or less, the storage stability of the three-dimensional printing composition is improved, and the printability of the obtained three-dimensional printing article is improved.

The photopolymerization accelerator is not particularly limited, but is, for example, a tertiary amine such as N,N-dimethyl-p-toluidine, N,N-dimethylaminoethyl methacrylate, triethanolamine, tolyldiethanolamine, methyl 4-dimethylaminobenzoate, ethyl 4-dimethylaminobenzoate (EPA), isoamyl 4-dimethylaminobenzoate, and the like; a barbituric acid derivative such as barbituric acid, 1,3-dimethylbarbituric acid, 1,3,5-trimethylbarbituric acid, 1,3,5-triethylbarbituric acid, 5-butylbarbituric acid, 1-benzyl-5-phenylbarbituric acid, 1-cyclohexyl-5-ethylbarbituric acid, and the like. The photopolymerization accelerator may be used alone or in combination of two or more.

The content of the photopolymerization accelerator in the three-dimensional printing composition according to the present embodiment is preferably 0.01 mass% or more and 10 mass% or less, and more preferably 0.1 mass% or more and 5 mass% or less.

The pigment is not particularly limited, but is, for example, titanium dioxide (white), iron oxide (yellow/red), triiron tetraoxide (black), and the like. The pigment may be used alone or in combination of two or more.

The content of the pigment in the three-dimensional printing composition according to the present embodiment is preferably 0.001 mass% or more and 1 mass% or less, and more preferably 0.05 mass% or more and 0.5 mass% or less.

The storage stabilizer is not particularly limited, but is, for example, 2-(2-hydroxy-5-methylphenyl)-2H-benzotriazole, and the like.

The content of the storage stabilizer in the three-dimensional printing composition according to the present embodiment is preferably 0.01 mass% or more and 2 mass% or less, and more preferably 0.05 mass% or more and 1 mass% or less.

As described above, the three-dimensional printing composition according to the present embodiment includes the first (meth)acrylate having a urethane bond, the second (meth)acrylate having a polyconjugated diene structure and a urethane bond, and a monofunctional third (meth)acrylate having a glass transition temperature Tg of 70°C or more. Accordingly, it is possible to impart toughness to the three-dimensional printing article obtained by using the three-dimensional printing composition according to the present embodiment, while maintaining the transparency of the three-dimensional printing article.

Therefore, according to the three-dimensional printing composition according to the present embodiment, it is possible to obtain a three-dimensional printing article having high strength and excellent transparency while having high flexibility.

In the three-dimensional printing composition according to the present embodiment, as described above, the first (meth)acrylate is preferably a (meth)acrylate having no polyconjugated diene structure. Accordingly, it is possible to prevent a decrease in strength and transparency due to an excessively large content of the polyconjugated diene structure in the three-dimensional printing composition, which includes the second (meth)acrylate having a polyconjugated diene structure.

In the three-dimensional printing composition according to the present embodiment, as described above, the second (meth)acrylate preferably has two or more urethane bonds. Accordingly, it is possible to achieve both high strength and transparency in the obtained three-dimensional printing article.

In the three-dimensional printing composition according to the present embodiment, as described above, the third (meth)acrylate is preferably a (meth)acrylate having no urethane bond. Accordingly, it is possible to prevent a decrease in strength and transparency due to an excessively large content of the urethane bond in the three-dimensional printing composition, which includes the first (meth)acrylate and the second (meth)acrylate having a urethane bond.

Both the first (meth)acrylate and the second (meth)acrylate having a urethane bond tend to have high viscosity. Unless the (meth)acrylates are diluted with a low-viscosity monomer or the like, the viscosity suitable for printing cannot be obtained. In contrast, the third (meth)acrylate having no urethane bond has a lower viscosity than the (meth)acrylates having a urethane bond. Therefore, by ensuring that the third (meth)acrylate constitutes about half of the total three-dimensional printing composition, the viscosity suitable for printing can be obtained.

The applications of the three-dimensional printing composition according to the present embodiment is not particularly limited, but the three-dimensional printing composition according to the present embodiment is used for three-dimensional printing of dental prostheses, orthodontic aligners, orthodontic retainers, surgical guides, splints (mouthpieces), indirect bonding trays, dental models, and the like, for example. Among these, the three-dimensional printing composition according to the present embodiment is preferably used for three-dimensional printing of orthodontic aligners, and more preferably for three-dimensional printing of orthodontic transparent tray aligners.

By using the three-dimensional printing composition according to the present embodiment for three-dimensional printing of orthodontic aligners, it is possible to improve the strength and transparency of the orthodontic aligners obtained as the three-dimensional printing article while giving flexibility to the orthodontic aligners.

A method of manufacturing a three-dimensional printing article includes a step of manufacturing a three-dimensional printing article using the three-dimensional printing composition according to the present embodiment.

When manufacturing the three-dimensional printing article using the three-dimensional printing composition according to the present embodiment, a publicly-known 3D printer may be used.

Examples of the 3D printer method include a stereo lithography (SLA) method, a digital light processing (DLP) method, and the like, and the DLP method is preferable.

Examples of the commercially available DLP-type 3D printer include MAX UV (manufactured by Asiga).

Examples of the method of manufacturing a three-dimensional printing article using the three-dimensional printing composition according to the present embodiment includes a method of irradiating a vat containing the three-dimensional printing composition with light from above (a free liquid level method), a method of irradiating a vat with light from below (a constrained liquid level method), and the like. Among these, the constrained liquid level method is preferable.

In the case of manufacturing a three-dimensional printing article using the constrained liquid level method, the lower surface of the vat has light transmittance, and light emitted from below the vat passes through the lower surface of the vat and is irradiated onto the three-dimensional printing composition.

In the case of manufacturing a three-dimensional printing article using the three-dimensional printing composition according to the present embodiment, the light irradiated to the three-dimensional printing composition is, for example, ultraviolet light having a wavelength of 380 nm to 450 nm, visible light, and the like.

Examples of the light source for irradiating the three-dimensional printing composition include an LED laser, an LED lamp, an LED projector, and the like.

The method of manufacturing the three-dimensional printing article may further include a step of cleaning the three-dimensional printing article, a step of post-polymerizing the three-dimensional printing article, and the like.

The three-dimensional printing article manufactured using the three-dimensional printing composition according to the present embodiment has high strength and high transparency while having high flexibility.

### Examples

Hereinafter, examples of the present invention will be described, but the present invention is not limited to the examples. In the following, numerical values without units or "parts" are based on mass unless otherwise specified.

### <Preparation of Three-Dimensional Printing Composition>

A three-dimensional printing composition was prepared in the compounding amount [mass%] presented in Table 1.

The abbreviations in Table 1 are as follows.

Exothane (registered trademark) 32 (X-894-0000): A mixture of an oligomer and a polymer of urethane dimethacrylate (CAS No. 72869-86-4) (manufactured by ESSTech Inc.)
IBOMA: Isobornyl methacrylate
TPO: (2,4,6-trimethylbenzoyl)diphenylphosphine oxide (a photopolymerization initiator)

### <Tensile Strength and Tensile Modulus>

Using CAD software (Composer (registered trademark), manufactured by Asiga), digital data for a tensile test specimen with a thickness of 1.0 mm and a width of 10 mm was designed in accordance with JIS K7161:2014. Then, three-dimensional printing was performed using a DLP-type 3D printer (MAX UV, manufactured by Asiga) and the three-dimensional printing composition. Then, the obtained printing article was thoroughly washed with isopropanol and post-polymerized using a dental photopolymerizer, and a test specimen for a tensile test was obtained.

Using the test specimen, a tensile test was conducted in water at 37°C at a test speed of 10 mm/min, and the tensile strength [MPa] and tensile modulus [MPa] were measured.

Evaluation of tensile strength and tensile modulus was performed based on the following criteria. For both tensile strength and tensile modulus, A was evaluated as excellent, B was evaluated as good, and C was evaluated as poor.

### (Evaluation Criteria for Tensile Strength)

A: 22 MPa or more
B: 20 MPa or more and less than 22 MPa
C: less than 20 MPa

### (Evaluation Criteria for Tensile Modulus)

A: 400 MPa or more
B: 100 MPa or more and less than 400 MPa
C: less than 100 MPa

### <Transparency>

Using CAD software (Composer, manufactured by Asiga), digital data for a color tone board with a diameter of 30 mm and a thickness of 1 mm was designed. Then, three-dimensional printing was performed using a DLP-type 3D printer (MAX UV, manufactured by Asiga) and the three-dimensional printing composition. Then, the obtained printing article was thoroughly washed with isopropanol and post-polymerized using a dental photopolymerizer, and a test specimen was obtained. The surface of the test specimen was polished using water-resistant polishing paper (#1000, 2000, and 4000) and used as a test specimen for transparency measurement.

The total light transmittance (T.T.) of the test specimen for transparency measurement was measured using a haze meter (manufactured by BYK, haze-gard i) and the transparency was evaluated.

Evaluation of transparency was performed based on the following criteria. A was evaluated as excellent, B was evaluated as good, and C was evaluated as poor.

### (Evaluation Criteria for Transparency)

A: 90% or more
B: 70% or more and less than 90%
C: less than 70%

### (Example 1)

A three-dimensional printing composition was prepared by blending 40 parts of Exothane 32, 10 parts of 1,2-polybutadiene urethane acrylate, 50 parts of IBOM (Tg. 110°C), 2 parts of TPO, 0.05 parts of 2,6-di-tert-butyl-p-cresol, and 0.01 parts of 2,5-bis(5-tert-butyl-2-benzoxazolyl)thiophene, and evaluated. The compounding amount and evaluation result of Example 1 are presented in Table 1.

### (Example 2)

A three-dimensional printing composition was prepared and evaluated in the same manner as in Example 1, except that the compounding amount of 1,2-polybutadiene urethane acrylate was set to 15 parts, and that 45 parts of t-butyl methacrylate (Tg. 118°C) were blended instead of IBOMA. The compounding amount and evaluation result of Example 2 are presented in Table 1.

### (Example 3)

A three-dimensional printing composition was prepared and evaluated in the same manner as in Example 1, except that the compounding amount of Exothane 32 was set to 35 parts and the compounding amount of 1,2-polybutadiene urethane acrylate) was set to 5 parts, and that 60 parts of phenyl methacrylate (Tg. 110°C) were blended instead of IBOMA. The compounding amount and evaluation result of Example 3 are presented in Table 1.

### (Comparative Example 1)

A three-dimensional printing composition was prepared and evaluated in the same manner as in Example 1, except that 50 parts of n-propyl methacrylate (Tg. 35°C) were blended instead of IBOMA. The compounding amount and evaluation result of Comparative Example 1 are presented in Table 1.

### (Comparative Example 2)

A three-dimensional printing composition was prepared and evaluated in the same manner as in Example 2, except that 45 parts of 2-ethylhexyl methacrylate (Tg. -6°C) were blended instead of t-butyl methacrylate. The compounding amount and evaluation result of Comparative Example 2 are presented in Table 1.

### (Comparative Example 3)

A three-dimensional printing composition was prepared and evaluated in the same manner as in Example 1, except that 1,2-polybutadiene urethane acrylate was not blended, and that the compounding amount of IBOMA was set to 60 parts. The compounding amount and evaluation result of Comparative Example 3 are presented in Table 1.

**[Table 1]**

| | EXAMPLE 1 | EXAMPLE 2 | EXAMPLE 3 | COMPARATIVE EXAMPLE 1 | COMPARATIVE EXAMPLE 2 | COMPARATIVE EXAMPLE 3 |
|---|---|---|---|---|---|---|
| Exothane 32 (X-894-0000) | 40 | 40 | 35 | 40 | 40 | 40 |
| 1,2-polybutadiene urethane acrylate | 10 | 15 | 5 | 10 | 15 | |
| IBOMA (Tg: 110°C) | 50 | | | | | 60 |
| t-butyl methacrylate (Tg: 118°C) | | 45 | | | | |
| phenyl methacrylate (Tg: 110°C) | | | 60 | | | |
| n-propyl methacrylate (Tg: 35°C) | | | | 50 | | |
| 2-ethylhexyl methacrylate (Tg: -6°C) | | | | | 45 | |
| TPO | 2 | 2 | 2 | 2 | 2 | 2 |
| 2,6-di-*tert*-butyl-*p*-cresol | 0.05 | 0.05 | 0.05 | 0.05 | 0.05 | 0.05 |
| 2,5-bis(5-tert-butyl-2-benzoxazolyl)thiophene | 0.01 | 0.01 | 0.01 | 0.01 | 0.01 | 0.01 |
| TENSILE STRENGTH (MPa) | 22.6 A | 24.9 A | 20.1 B | 4.1 C | 3.7 C | 18.2 C |
| TENSILE MODULUS (MPa) | 425 A | 447 A | 413 A | 19 C | 14 C | 350 B |
| TRANSPARENCY (T.T., %) | 92.9 A | 91.8 A | 92.2 A | 91.4 A | 91.7 A | 92.1 A |

From Table 1, the printing articles that are obtained by using three-dimensional printing compositions containing a (meth)acrylate having a urethane bond, a methacrylate having a polyconjugated diene structure and a urethane bond, and a monofunctional methacrylate having a glass transition temperature Tg of 70°C or more, exhibited favorable tensile strength, tensile modulus, and transparency (Examples 1 to 3).

In contrast, the printing articles that are obtained by using three-dimensional printing compositions containing a monofunctional methacrylate having a glass transition temperature Tg of less than 70°C exhibited poor tensile strength and tensile modulus (Comparative Examples 1 and 2). The printing article that is obtained by using a three-dimensional printing composition containing a polyconjugated diene structure and no methacrylate having a urethane bond exhibited poor tensile strength (Comparative Example 3).

While embodiments of the present invention have been described, the present invention is not limited to specific embodiments, and various modifications and variations are possible within the scope of the invention as claimed.

The present application is based on and claims priority to Japanese Patent Application No. 2021-193483, filed November 29, 2021, the contents of which are incorporated herein by reference in their entirety.

## Claims

1. A three-dimensional printing composition comprising:
a first (meth)acrylate having a urethane bond;
a second (meth)acrylate having a polyconjugated diene structure and a urethane bond; and
a monofunctional third (meth)acrylate having a glass transition temperature Tg of 70°C or more.

2. The three-dimensional printing composition according to claim 1, wherein the second (meth)acrylate has two or more urethane bonds.

3. The three-dimensional printing composition according to claim 1 or 2, wherein the third (meth)acrylate does not have the urethane bond.

4. The three-dimensional printing composition according to any one of claims 1 to 3, wherein the first (meth)acrylate does not have the polyconjugated diene structure.

5. The three-dimensional printing composition according to any one of claims 1 to 4, used for a three-dimensional printing of an orthodontic aligner.
